# EUROPÄISCHE PATENTSCHRIFT

(11) **EP 3 394 413 B1**
(45) Veröffentlichungstag und Bekanntmachung des Hinweises auf die Patenterteilung: **24.06.2020**
(21) Anmeldenummer: 16801237.5
(22) Anmeldetag: 24.11.2016
(51) Int. Cl.: F02D 13/02, F02D 41/00, F02D 41/28, F02D 41/24

(54) **VERFAHREN ZUR ERMITTLUNG DER ZUSAMMENSETZUNG DES ZUM BETRIEB EINES VERBRENNUNGSMOTORS VERWENDETEN KRAFTSTOFFES**
METHOD FOR DETERMINING THE COMPOSITION OF THE FUEL USED TO OPERATE AN INTERNAL COMBUSTION ENGINE
PROCÉDÉ POUR DÉTERMINER LA COMPOSITION DU CARBURANT UTILISÉ POUR FAIRE FONCTIONNER UN MOTEUR À COMBUSTION INTERNE

(30) Priorität: 22.12.2015 DE 102015226446
(43) Veröffentlichungstag der Anmeldung: 31.10.2018
(73) Patentinhaber: Vitesco Technologies GmbH, 30165 Hannover (DE)
(72) Erfinder: BRAUN, Tobias, 93152 Undorf (DE); HAFT, Gerhard, 93138 Lappersdorf (DE); LIST, Rainer, 93059 Regensburg (DE)
(74) Vertreter: Waldmann, Georg Alexander
(86) Internationale Anmeldenummer: PCT/EP2016/078742
(87) Internationale Veröffentlichungsnummer: WO 2017/108324

(56) Entgegenhaltungen:
- EP-A1- 2 581 588
- EP-A1- 2 725 216
- WO-A1-2014/154227
- US-A- 5 697 346
- US-A1- 2009 178 474

## Beschreibung

Die vorliegende Erfindung betrifft ein Verfahren zur Ermittlung der Zusammensetzung des im Betrieb eines Verbrennungsmotors verwendeten Kraftstoffes aus dem Saugrohrdrucksignal während des Betriebs des Verbrennungsmotors.

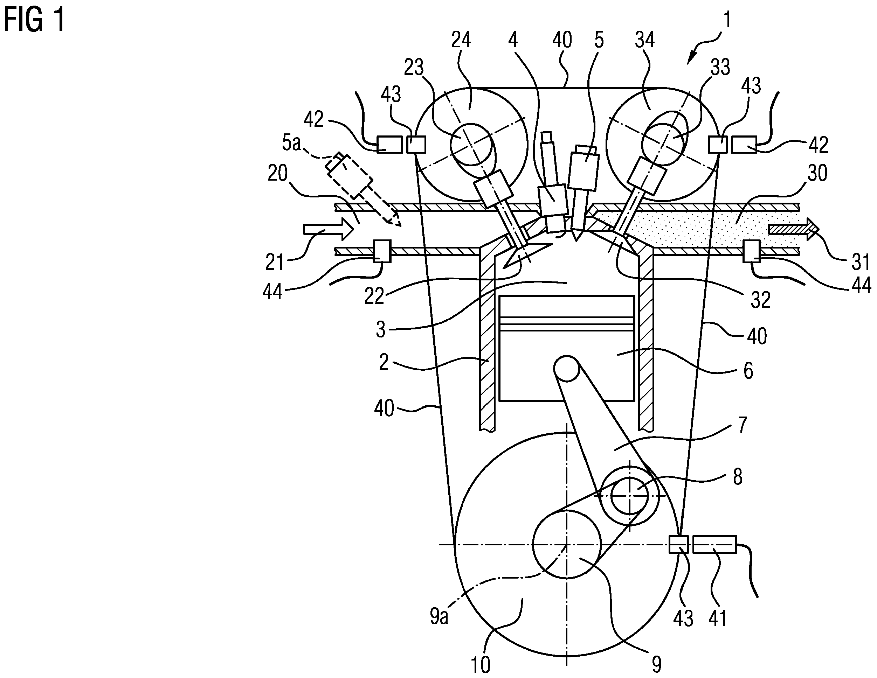

Hubkolben-Verbrennungsmotoren, die in diesem Zusammenhang und im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinder eines ggf. auch mehrzylindrigen Verbennungsmotors mit den wichtigsten Funktionseinheiten darstellt.

Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 aufgrund ihrer Massenträgheit, nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen, muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet (im Falle eines Benzin-Verbrennungsmotors mittels Zündkerze und im Falle eines Diesel-Verbrennungsmotors durch Selbstentzündung) und zum Antrieb des Hubkolbens 6 verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch 21 (bei Saugrohreinspritzung mittels Einspritzventil 5a, in Fig. 1 als Alternative gestrichelt dargestellt) oder auch nur Frischluft (bei Kraftstoff-Direkteinspritzung mittels Einspritzventil 5) aus dem Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines Einspritzventils 5 eingespritzt. Im folgenden Arbeitstakt wird das Kraftstoff-Luft-Gemisch, zum Beispiel beim Benzin-Verbrennungsmotor mittels einer Zündkerze 4, gezündet, verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas 31 aus dem Brennraum 3 in den Abgastrakt 30 ausgeschoben.

Die Abgrenzung des Brennraumes 3 zum Ansaugtrakt 20 oder Abgastrakt 30 des Verbrennungsmotors 1 erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und der Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber 43 zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel, ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassnockenwellenhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Für einen optimalen Betrieb des Verbrennungsmotors (bezüglich Emissionen, Verbrauch, Leistung, Laufruhe etc.) sollte die während des Ansaugtaktes angesaugte Frischgasladung bestmöglich bekannt sein und die zugemessene Kraftstoffmenge möglichst genau darauf abgestimmt sein, um zum Beispiel einen Betrieb mit Lambda (λ)=1, also bei der für die vollständige Verbrennung des zuzumessenden Kraftstoffes erforderlichen Mindestmenge an Sauerstoff gewährleisten zu können.

Die angesaugte Frischgasladung ist abhängig von verschiedenen Faktoren, wie zum Beispiel der konstruktiven Gegebenheiten des Verbrennungsmotors, dem aktuellen Betriebspunkt sowie der aktuellen Einstellungen verschiedener Stelleinrichtungen, wie zum Beispiel einer Drosselklappe. Stand der Technik zur Bestimmung der Frischgasladung sind die Vermessung eines sogenannten Referenz-Verbrennungsmotors in allen auftretenden Betriebszuständen (Drehzahl, Last, Ansteuerung sämtlicher Aktuatoren, unterschiedliche Ventilhübe, Ansteuerung von Klappen, Ansteuerung der Phasensteller für Einlass- und Auslassventil, Abgasturbolader, Kompressor etc.) und die Speicherung dieser Messwerte (bzw. Derivate davon oder Modellansätze, die das Verhalten wiedergeben) in entsprechenden Kennfeldern auf dem Motorsteuergerät eines entsprechenden Serien-Verbrennungsmotors. Alle baugleichen, in Serie produzierten Verbrennungsmotoren der gleichen Baureihe werden mit diesem erzeugten Referenzdatensatz betrieben. In erster Näherung kann somit die Frischgasladung als bekannt angenommen werden.

Die zugehörige, zuzumessende, insbesondere einzuspritzende Kraftstoffmenge wird dann gemäß dem vorgegebenen, von der Kraftstoffart bzw. der Kraftstoffqualität oder der Kraftstoffzusammensetzung abhängigen Luft-Kraftstoff-Verhältnis (A/F-Ratio) des jeweiligen Kraftstoffes berechnet.

Je nach verwendetem Kraftstoff ergeben sich also Unterschiede. So liegen zum Beispiel bei Mischkraftstoffen aus Super-Benzin und Ethanol folgende Luft-Kraftstoff-Verhältnisse vor:

| | | |
|---|---|---|
| 100 Vol% Superbezin | 0 Vol% Ethanol (E0) | => 14,5 |
| 75 Vol% Superbenzin | 25 Vol% Ethanol (E25) | => 13,1 |
| 50 Vol% Superbenzin | 50 Vol% Ethanol (E50) | => 11,8 |
| 25 Vol% Superbenzin | 75 Vol% Ethanol (E75) | => 10,4 |
| 0 Vol% Superbenzin | 100 Vol% Ethanol (E100) | => 9,0 |

Der Ethanol-Anteil ist in der Bezeichnung des Mischkraftstoffes jeweils in Volumenprozent angegeben, das heißt der Mischkraftstoff E25 besteht demnach zu 75 Vol% aus Super-Benzin und zu 25 Vol% aus Ethanol.

Zum optimalen Betrieb des Verbrennungsmotors in Bezug auf Verbrauch, Laufruhe und Emissionen muss somit auch die Zusammensetzung des im jeweils aktuellen Betrieb verwendeten Kraftstoffes bestmöglich bekannt sein, da sich sonst fehlerhaft zugemessene Kraftstoffmengen ergeben können. Desweiteren können verschiedene Kraftstoffe oder Kraftstoff-Zusammensetzungen unterschiedliche Eigenschaften, wie zum Beispiel unterschiedliche Klopffestigkeiten, aufweisen. Dies kann zur Optimierung des Betriebs weitere Anpassungen, wie zum Beispiel des Einspritzzeitpunktes oder des Zündzeitpunktes, erforderlich werden lassen.

Da Kraftstoffe gegebenenfalls nicht immer in gleicher Qualität bzw. Zusammensetzung zur Verfügung stehen, können hier von Tankfüllung zu Tankfüllung Unterschiede auftreten, die den Betrieb des Verbrennungsmotors negativ beeinflussen.

Aus diesem Grund sind aus dem Stand der Technik bereits diverse Verfahren und Vorrichtungen bekannt, die die Ermittlung der Kraftstoffzusammensetzung bzw. der Kraftstoffqualität zum Ziel haben.

So ist beispielsweise in dem Dokument DE 10 2009 031 159 B3 ein Verfahren und eine Vorrichtung zum Bestimmen einer Kraftstoffqualität, insbesondere einer Gemischzusammensetzung eines Kraftstoffs offenbart. Das Verfahren beruht auf der Bestimmung eines elektrischen Parameters des Kraftstoffes mittels eines einen Stator und einen Rotor aufweisenden Elektromotors, wobei in einem Spalt zwischen Rotor und Stator ein elektrischer Parameter des darin befindlichen Kraftstoffs bestimmt wird, welcher ein Maß für die Kraftstoffqualität ist.

Auch aus dem Dokument DE 10 2009 017 207 B4 ist beispielsweise ein Verfahren zur Detektion der Kraftstoffqualität bekannt, bei dem mittels eines Kraftstoffqualitätsberechnungsmodul ein Kraftstoffqualitätswert auf der Grundlage eines Drehmoments des Motors und einer Motordrehzahländerung, die über eine erste Zeitspanne gemessen wird, berechnet wird.

Weiterhin offenbart auch Dokument DE 10 2011 077 404 B4 ein Verfahren zur Bestimmung des Kraftstofftyps, das auf einer hochgenauen Zuführung einer bestimmten Kraftstoff-Differenz-Fördermenge in einen Kraftstoff-Hochdruckspeicher basiert. Aus der entsprechenden Druckanstiegskurve wird eine Messwertkurve ermittelt, die mit in einer zugehörigen Steuervorrichtung gespeicherten Vergleichswertkurven für unterschiedliche Kraftstoffqualitäten verglichen wird. Bei einer ausreichenden Übereinstimmung der Messwertkurve mit einer Vergleichswertkurve wird die zugeordnete Kraftstoffqualität bestimmt.

Ein weiteres Beispiel von Verfahren zur Ermittlung von Kraftstoffzusammensetzung wird im Dokument WO2014/154227 A1 offenbart.

Die bekannten Verfahren erfordern häufig zusätzliche Sensoren oder sind aufgrund schwer zu erfassender Umgebungseinflüsse kompliziert durchzuführen und im Ergebnis unbefriedigend.

Die Aufgabe besteht deshalb darin, möglichst ohne zusätzliche Sensoranordnung und vorrichtungstechnischen Aufwand, eine möglichst exakte Bestimmung der Qualität bzw. der Zusammensetzung des im aktuell laufenden Betrieb verwendeten Kraftstoffes zu ermöglichen, um entsprechende Anpassungen der Betriebsparameter zur Optimierung des laufenden Betriebs vornehmen zu können.

Diese Aufgabe wird gelöst durch das erfindungsgemäße Verfahren zur Ermittlung der Zusammensetzung des zum Normalbetrieb eines Verbrennungsmotors verwendeten Kraftstoffes gemäß Hauptanspruch. Fortbildungen und Ausführungsvarianten des erfindungsgemäßen Verfahrens sind Gegenstand der abhängigen Ansprüche.

Erfindungsgemäß werden bei Durchführung des Verfahrens einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen und daraus wird ein entsprechendes Druckschwingungssignal erzeugt. Gleichzeitig wird ein Kurbelwellen-Phasenwinkelsignal ermittelt. Aus dem Druckschwingungssignal wird mit Hilfe Diskreter-Fourier-Transformation die Ist-Phasenlage einer ausgesuchten Signalfrequenz der gemessenen Druckschwingungen in Bezug auf das Kurbelwellen-Phasenwinkelsignal ermittelt. Das Verfahren zeichnet sich vor allem dadurch aus, dass zusätzlich zur ermittelten Ist-Phasenlage der ausgesuchten Signalfrequenz bei saugsynchroner Kraftstoffeinspritzung, in gleicher Weise eine weitere Vergleichs-Phasenlage der ausgesuchten Signalfrequenz ermittelt wird. Diese wird ohne Kraftstoffeinspritzung oder bei direkter Kraftstoffeinspritzung in den geschlossenen Brennraum, ermittelt. In weiterer Folge wird eine Ist-Phasenlagendifferenz zwischen der Ist-Phasenlage und der Vergleichs-Phasenlage ermittelt. Auf Basis der ermittelten Ist-Phasenlagendifferenz, wird dann unter Heranziehung von Referenz-Phasenlagendifferenzen der gleichen Signalfrequenz für unterschiedliche Kraftstoffzusammensetzungen, die Kraftstoffzusammensetzung des aktuell verwendeten Kraftstoffes ermittelt.

Zur Erläuterung der Funktionsweise eines der Erfindung zugrundeliegenden Verbrennungsmotors (siehe oben) sowie der Zusammenhänge zwischen Kraftstoff Zusammensetzung und Phasenlage des im Saugrohr gemessenen Druckschwingungssignals sowie der Grundlage und Funktionsweise des erfindungsgemäßen Verfahrens, wird auf die Figuren Bezug genommen. Es zeigt:
- Figur 1: eine vereinfachte Darstellung eines hier verkürzt als Verbrennungsmotor bezeichneten Hubkolben-Verbrennungsmotors mit den wichtigsten Funktionskomponenten;
- Figur 2: ein Diagramm zur Darstellung der Abhängigkeit zwischen der Phasenlage der Ansaugfrequenz und dem Ethanol-Anteil des verwendeten Kraftstoffes;
- Figur 3: ein Diagramm zur Verdeutlichung der Phasenlagendifferenzen zwischen ermittelten Ist-Phasenlagen und Vergleichs-Phasenlagen in Abhängigkeit vom Ethanol-Anteil im Kraftstoff;
- Figur 4: ein Diagramm zur Darstellung von Referenz-Phasenlagendifferenzen
- Figur 5: Ein Diagramm zur Darstellung der Phasenlagendifferenzen eines Referenz-Verbrennungsmotors im Vergleich zu den Ist-Phasenlagendifferenzen eines baugleichen Serien-Verbrennungsmotors.

Die Erfindung beruht auf der Erkenntnis, dass, unter der Voraussetzung einer saugsynchronen Kraftstoffeinspritzung, zwischen der Zusammensetzung des zum Betrieb verwendeten Kraftstoffs und der Phasenlage der dynamischen Druckschwingungen im Einlasstrakt des Verbrennungsmotors ein eindeutiger Zusammenhang besteht. Dieser Zusammenhang zeigt sich insbesondere bei Ottomotoren beispielsweise im Zusammenhang mit den unterschiedlichen Anteilen an Superkraftstoff und Ethanol. Physikalische Ursache für diesen Zusammenhang sind die unterschiedlichen Verdampfungsenthalpien der verwendeten Kraftstoffzusammensetzungen. Beispielsweise weist ein E0-Kraftstoff eine Verdampfungsenthalpie von ca. 350kJ/kg auf, wogegen ein E100-Kraftstoff eine Verdampfungsenthalpie von ca. 920 kJ/kg aufweist. Bei saugsynchroner Einspritzung führen diese unterschiedlichen Verdampfungsenthalpien zu einer unterschiedlichen Abkühlung der Frischgasladung, wodurch sich wiederum die Dichte und damit die Schall-Ausbreitungsgeschwindigkeit in der Frischgasladung ändern und somit letztlich die Ausbreitung der Druckwellen im Ansaugtrakt messbar verändert wird.

Gemäß dem erfindungsgemäßen Verfahren werden die einem Zylinder des Verbrennungsmotors zuordenbaren dynamische Druckschwingungen im Einlasstrakt des betreffenden Verbrennungsmotors, an einem definierten Betriebspunkt zunächst bei saugsynchroner Kraftstoffeinspritzung, im Normalbetrieb gemessen und daraus ein entsprechendes Druckschwingungssignal erzeugt. Gleichzeitig wird, sozusagen als Referenz- oder Bezugs-Signal, ein Kurbelwellen-Phasenwinkelsignal des Verbrennungsmotors ermittelt.

Ein möglicher Betriebspunkt wäre zum Beispiel der Leerlaufbetrieb bei vorgegebener Drehzahl. Unter saugsynchroner Einspritzung ist dabei eine Einspritzung in einem Zeitraum zu verstehen, während dessen bei geöffnetem Einlassventil Frischgas in den Brennraum zugeführt wird. Dies kann durch Einspritzung des Kraftstoffes in das Saugrohr oder direkt in den Brennraum des jeweiligen Zylinders bei gleichzeitig geöffnetem Einlassventil erfolgen. Der Normalbetrieb kennzeichnet den bestimmungsmäßigen Betrieb des Verbrennungsmotors, beispielsweise in einem Kraftfahrzeug, wobei der Verbrennungsmotor ein Exemplar einer Serie von baugleichen Verbrennungsmotoren ist. Eine weitere gebräuchliche Bezeichnung für einen Solchen Verbrennungsmotor, die auch im Weiteren entsprechend verwendet wird ist Serien-Verbrennungsmotor. Zur Analyse des im Ansaugtrakt des Verbrennungsmotors aufgenommenen Druckschwingungssignals in Bezug auf die Phasenlage, kann dieses einer Diskreten Fourier-Transformation (DFT) unterzogen werden. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können. Im vorliegenden Fall hat sich gezeigt, dass insbesondere die Phasenlage ausgesuchter Signalfrequenzen des Druckschwingungssignals in Abhängigkeit stehen zu der verwendeten Kraftstoffzusammensetzung.

Dazu werden nur diejenigen Signalfrequenzen herangezogen, die der Ansaugfrequenz, als Grundfrequenz oder 1. Harmonische, des Verbrennungsmotors oder einem Vielfachen der Ansaugfrequenz, also der 2. bis n. Harmonischen, entsprechen, wobei die Ansaugfrequenz wiederum in eindeutigem Zusammenhang mit der Drehzahl des Verbrennungsmotors steht. Für zumindest eine ausgesuchte Signalfrequenz wird dann, unter Heranziehung des parallel erfassten Kurbelwellen-Phasenwinkelsignals, die Phasenlage dieser ausgesuchten Signalfrequenzen in Bezug auf den Kurbelwellen-Phasenwinkel ermittelt.

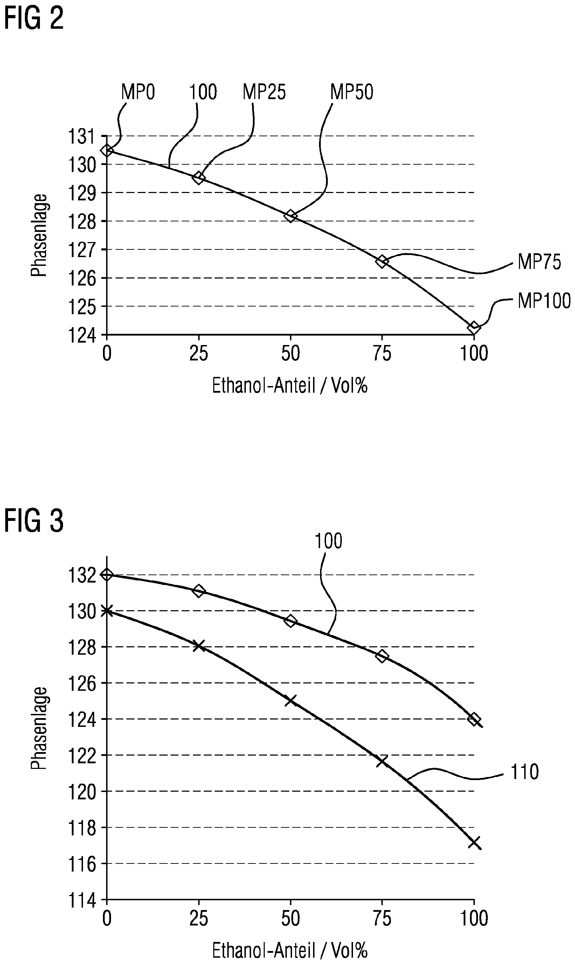

Die Abhängigkeit der Phasenlage der ausgesuchten Signalfrequenzen von der Kraftstoffzusammensetzung wird veranschaulicht in Figur 2 am Beispiel eines Kraftstoffes mit unterschiedlichem Ethanol-Anteil. Dargestellt ist dort die Phasenlage einer Signalfrequenz die der Ansaugfrequenz entspricht in Abhängigkeit vom Ethanol-Anteil eines Benzin-Ethanol-Gemisches. Es zeigt sich dabei eine Verschiebung der Phasenlage der Ansaugfrequenz hin zu kleineren Werten bei zunehmendem Ethanol-Anteil im Kraftstoff. Durch Interpolation zwischen den einzelnen Messpunkten MP0 bis MP100 ergibt sich eine stetig verlaufende Phasenlage-Kurve 100 mit nahezu linearem Verlauf.

Prinzipiell kann dieser Zusammenhang alleine bereits genutzt werden um aus im Normalbetrieb ermittelten Ist-Phasenwinkeln der ausgesuchten Signalfrequenz des Druckschwingungssignals die Kraftstoffzusammensetzung zu ermitteln, durch einen Vergleich mit vorausgehend, zum Beispiel an einem baugleichen Referenz-Verbrennungsmotor ermittelten, sogenannten Referenz-Phasenlagen der gleichen Signalfrequenz. Diesen Referenz-Phasenlagen sind die entsprechenden Kraftstoffzusammensetzungen eindeutig zugeordnet. So kann über die mit der ermittelten Ist-Phasenlage übereinstimmende Referenz-Phasenlage auf die zugeordnete Kraftstoffzusammensetzung geschlossen werden.

Umfangreiche Messungen und Versuche haben jedoch gezeigt, dass schwer zu fassende Störeinflüsse die Phasenlage der ausgesuchten Signalfrequenzen zusätzlich beeinflussen können, wodurch die Genauigkeit der Bestimmung der Kraftstoffzusammensetzung gemäß der oben genannten einfachen Weise negativ beeinflusst werden kann. Insbesondere sind hier bautechnisch toleranzbedingte Abweichungen des Verbrennungsmotors von dem zur Ermittlung der Referenz-Phasenlagen benutzten Referenz-Verbrennungsmotor zu nennen. Toleranzbedingte Abweichungen können sich zum Beispiel ergeben durch abweichende Steuerzeiten der Ein- und Auslassventile und durch Abweichungen der Hubkolben-Positionen in Bezug auf den gemessenen Phasenwinkel der Kurbelwelle und durch Abweichungen in der Geometrie der luftführenden Bauteile im Ansaugtrakt. Da diese Abweichungen an jedem Verbrennungsmotor der Serie an sich baugleicher Verbrennungsmotoren unterschiedlich, zumindest innerhalb einer bestimmten Streubreite, ausfallen können, wäre zu deren Korrektur eine sehr aufwändige Vermessung jedes einzelnen Serien-Verbrennungsmotors erforderlich.

Das erfindungsgemäße Verfahren bietet hier eine wesentlich einfachere und kostengünstigere Lösung an, indem der Einfluss der Kraftstoffzusammensetzung auf die Phasenlage der Signalfrequenzen von den weiteren Einflüssen quasi getrennt und für sich betrachtet wird. Dies wird dadurch erreicht, dass zunächst, wie oben bereits beschrieben, bei saugsynchroner Einspritzung die Ist-Phasenlage einer ausgesuchten Signalfrequenz der gemessenen Druckschwingungen in Bezug auf das Kurbelwellen-Phasenwinkelsignal ermittelt wird. Diese Ist-Phasenlage beinhaltete sämtliche bekannten und unbekannten Einflussgrößen.

In der Folge wird dann zusätzlich zur ermittelten Ist-Phasenlage der ausgesuchten Signalfrequenz bei saugsynchroner Kraftstoffeinspritzung, in gleicher Weise eine weitere Vergleichs-Phasenlage der ausgesuchten Signalfrequenz ohne Kraftstoffeinspritzung oder bei direkter Kraftstoffeinspritzung in den geschlossenen Brennraum, ermittelt. Durch das Fehlen der Kraftstoffeinspritzung oder die Abtrennung der Kraftstoffeinspritzung vom Ansaugtrakt durch die geschlossenen Einlassventile ergibt sich nun eine Vergleichs-Phasenlage der ausgesuchten Signalfrequenz, die nicht durch eingespritzten Kraftstoff beeinflusst ist und lediglich alle anderen Einflussgrößen enthält. In Figur 3 ist zum Einen die Phasenlagen-Kurve 100 dargestellt, welche die bei saugsynchroner Einspritzung ermittelten Ist-Phasenlagen zeigt und zum Anderen ist die Phasenlagen-Kurve 110 dargestellt, welche die ohne Kraftstoffeinspritzung ermittelten Vergleichs-Phasenlagen zeigt. Aus der Darstellung in Figur 3 lässt sich ein steigender Einfluss der Kraftstoffeinspritzung mit zunehmendem Ethanol-Anteil ablesen.

Durch Subtraktion des Wertes der Vergleichs-Phasenlage vom Wert der Ist-Phasenlage erhält man nun eine Ist-Phasenlagendifferenz, die alleine den Einfluss des eingespritzten Kraftstoffes wiederspiegelt. Um nun die Kraftstoffzusammensetzung des aktuell verwendeten Kraftstoffes zu ermitteln, wird die ermittelte Ist-Phasenlagendifferenz mit zuvor an einem Referenz-Verbrennungsmotor ermittelten Referenz-Phasenlagendifferenzen der gleichen Signalfrequenz für unterschiedliche Kraftstoffzusammensetzungen verglichen und auf die zugeordnete Kraftstoffzusammensetzung rückgeschlossen.

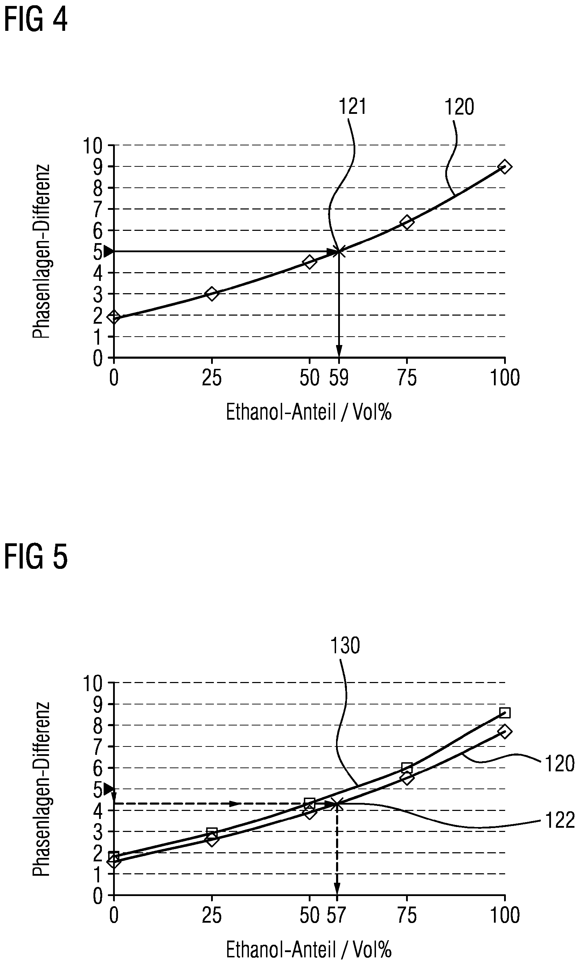

In Figur 4 sind mittels der Phasenlagendifferenz-Kurve 120 entsprechende Referenz-Phasenlagendifferenzen in Abhängigkeit vom Ethanol-Anteil im Kraftstoff dargestellt.

Zur einfachen Durchführung des erfindungsgemäßen Verfahrens werden deshalb die zuvor an einem Referenz-Verbrennungsmotor der Serie baugleicher Verbrennungsmotoren unter Verwendung von Referenz-Kraftstoffzusammensetzungen ermittelten Referenz-Phasenlagendifferenzen in Abhängigkeit von den zugehörigen Kraftstoffzusammensetzungen in Referenz-Kennfeldern gespeichert, aus denen sie zum Vergleich abgerufen werden können. Die einfachste Form eines solchen Kennfeldes ist in Figur 4 beispielhaft dargestellt und besteht in einem Diagramm, das, für einen bestimmten Betriebspunkt des Verbrennungsmotors, die Abhängigkeit zwischen der Referenz-Phasenlagendifferenz einer bestimmten, ausgesuchten Signalfrequenz des Druckschwingungssignals, in diesem Fall die Ansaugfrequenz, und der jeweils zugehörigen Kraftstoffzusammensetzung, hier der Ethanol-Anteil, in Form einer Referenz-Phasenlagendifferenz-Kurve 120 abbildet. Ein entsprechendes umfangreicheres Kennfeld kann beispielsweise entsprechende Referenz-Phasenlagendifferenz-Kurven für unterschiedliche Betriebspunkte des Verbrennungsmotors und unterschiedliche Signalfrequenzen enthalten.

Die Ermittlung der Zusammensetzung des aktuell verwendeten Kraftstoffes kann in diesem Beispiel dann auf einfache Weise derart erfolgen, dass ausgehend von der ermittelten Ist-Phasenlagendifferenz der Ansaugfrequenz im Normalbetrieb des Verbrennungsmotors, in Figur 4 bei Phasenlagendifferenz 5, der zugehörige Referenzpunkt 121 (in waagerechter Richtung) auf der Referenz-Phasenlagendifferenz-Kurve 120 ermittelt und ausgehend wiederum von diesem (in senkrechter Richtung), die zugehörige Kraftstoffzusammensetzung, hier Ethanol-Anteil von 59 Vol%, ermittelt wird, wie anhand der mit Pfeilen gekennzeichneten Linie in Figur 4 bildlich dargestellt.

Eine weitere alternative Möglichkeit besteht darin, eine die entsprechende Referenz-Phasenlagendifferenz-Kurve charakterisierende Modell-Funktion, die den Zusammenhang zwischen Referenz-Phasenlagendifferenz und der Kraftstoffzusammensetzung abbildet, bereitzustellen und unter Vorgabe der ermittelten Ist-Phasenlagendifferenz die Kraftstoffzusammensetzung damit aktuell zu berechnen. Der Vorteil dieser Alternative liegt darin, dass insgesamt weniger Speicherkapazität zur Verfügung gestellt werden muss.

Bei der Durchführung des Verfahrens wird davon ausgegangen, dass die Referenz-Phasenlagendifferenzen für unterschiedliche Kraftstoffzusammensetzungen zur Durchführung des Verfahrens zur Verfügung stehen.

Dazu werden in Erweiterung des erfindungsgemäßen Verfahrens die Referenz-Phasenlagendifferenzen der ausgesuchten Signalfrequenzen dem Normalbetrieb vorausgehend an einem Referenz-Verbrennungsmotor in Abhängigkeit von unterschiedlichen Kraftstoffzusammensetzungen ermittelt. Der Referenz-Verbrennungsmotor ist dabei ein zu der entsprechenden Verbrennungsmotorserie baugleicher Verbrennungsmotor, bei dem insbesondere sichergestellt ist, dass möglichst keine, das Verhalten beeinflussende, bauliche Toleranzabweichungen vorhanden sind. Dadurch soll gewährleistet werden, dass der Zusammenhang zwischen Kraftstoffzusammensetzung und Phasenlagendifferenz möglichst genau und ohne Einfluss weiterer Störfaktoren ermittelt wird.

Die Ermittlung entsprechender Referenz-Phasenlagendifferenzen kann mit Hilfe des Referenz-Verbrennungsmotors in unterschiedlichen Betriebspunkten und unter Vorgabe bzw. Variation weiterer Betriebsparameter wie der Temperatur des angesaugten Mediums, der Kühlmitteltemperatur oder der Motordrehzahl erfolgen. Die so entstehenden Referenzwert-Kennfelder können dann vorteilhaft bei allen baugleichen Serien-Verbrennungsmotoren zur Verfügung gestellt, insbesondere in einem Speicherbereich einer dem Verbrennungsmotor zuordenbaren elektronischen Recheneinheit abgelegt werden.

In Fortführung der vorgenannten vorausgehenden Ermittlung der Referenz-Phasenlagendifferenzen der ausgesuchten Signalfrequenzen kann aus den ermittelten Referenz-Phasenlagendifferenzen der ausgesuchten Signalfrequenz und den zugeordneten Kraftstoffzusammensetzungen, beispielsweise mittels eines Polynom-Ansatzes, eine Modell-Funktion hergeleitet werden, die zumindest den Zusammenhang zwischen den Referenz-Phasenlagendifferenzen der ausgesuchten Signalfrequenz und den Kraftstoffzusammensetzungen abbildet.

Hierbei können optional auch zusätzliche Parameter, wie zum Beispiel die Temperatur des angesaugten Mediums im Ansaugtrakt, die Temperatur eines zur Kühlung des Verbrennungsmotors verwendeten Kühlmittels und die Motordrehzahl des Verbrennungsmotors mit einbezogen werden, die, wie im Weiteren noch erläutert werden soll, zur Steigerung der Genauigkeit des Verfahrens zusätzlich herangezogen werden können.

So entsteht eine Modell-Funktion mit der unter Vorgabe der Phasenlagendifferenz und ggf. unter Einbeziehung der oben genannten zusätzlichen Parameter die jeweilige Kraftstoffzusammensetzung aktuell berechnet werden kann.

Die Modell-Funktion kann dann vorteilhaft bei allen baugleichen Serien-Verbrennungsmotoren zur Verfügung gestellt, insbesondere in einem Speicherbereich einer dem Verbrennungsmotor zuordenbaren elektronischen Recheneinheit abgelegt werden. Die Vorteile liegen darin, dass die Modell-Funktion weniger Speicherplatz benötigt als umfangreiche Referenzwert-Kennfelder.

Obwohl durch die Betrachtung der Phasenlagendifferenzen, wie oben dargestellt, Einflüsse durch toleranzbedingte Abweichungen des jeweiligen Serien-Verbrennungsmotors vom Referenz-Verbrennungsmotor eliminiert sein sollten, zeigen sich bei Vergleichsmessungen unter Verwendung von Referenz-Kraftstoffen mit bekannter Kraftstoffzusammensetzung, motorindividuelle Abweichungen der Phasenlagendifferenzen. In Figur 5 ist dies anhand der Referenz-Phasenlagendifferenz-Kurve 120 und einer motorindividuellen Ist-Phasenlagendifferenz-Kurve 130 dargestellt. Die hier aufgezeigte Abweichung der Ist-Phasenlagendifferenzen beträgt hier im Durchschnitt +14% in Bezug auf die Referenz-Phasenlagendifferenzen.

Um solche motorindividuellen Abweichungen zusätzlich zu berücksichtigen und so die Genauigkeit des Verfahrens weiter zu steigen, kann in Weiterbildung des erfindungsgemäßen Verfahrens, bei der Ermittlung der Kraftstoffzusammensetzung ein zusätzlicher, für den jeweiligen Verbrennungsmotor individueller Korrekturwert berücksichtigt werden. Dies kann beispielsweise dadurch erfolgen, dass die ermittelte Ist-Phasenlagendifferenz zunächst mit dem Korrekturfaktor korrigiert wird und dann mit der korrigierten Ist-Phasenlage, mittels Referenz-Phasenlagendifferenz-Kennfeld oder Modell-Funktion, die Kraftstoffzusammensetzung des aktuell verwendeten Kraftstoffes ermittelt wird. in dem oben genannten Beispiel eine durchschnittlichen Abweichung von +14% ergibt sich ein Korrekturfaktor von 1/1,14, mit dem die ermittelte Ist-Phasenlagendifferenz zunächst multipliziert wird und erst dann mit dem korrigierten Ist-Phasenlagendifferenzwert die Kraftstoffzusammensetzung ermittelt wird. Diese Vorgehensweise ist qualitativ auch in Figur 5 bildlich durch eine gestrichelte Linie dargestellt. Ausgehend von dem am Serien-Verbrennungsmotor ermittelten Ist-Phasenlagendifferenzwert 5 wird zunächst eine Korrektur mittels des Korrekturwertes 1/1,14 auf einen korrigierten Phasenlagendifferenzwert von 4,4 vorgenommen. Mit diesem Wert wird dann (in waagerechter Richtung) über die Referenz-Phasenlagendifferenz-Kurve 120 der korrigierte Referenzpunkt 122 und von diesem weitergehend (in senkrechter Richtung) ein Ethanol-Anteil von 57 Vol% ermittelt.

In einer Ausführung des erfindungsgemäßen Verfahrens wird der oben genannte motorindividuelle Korrekturwert dem Normalbetrieb vorausgehend am jeweiligen Serien-Verbrennungsmotor ermittelt. Dies kann erfolgen durch Ermittlung der Ist-Phasenlagendifferenz unter Verwendung eines Referenz-Kraftstoffes mit bekannter Kraftstoffzusammensetzung und nachfolgendem Vergleich mit der Referenz-Phasenlagendifferenz für die bekannte Kraftstoffzusammensetzung. Aus der ermittelten Differenz kann dann der Korrekturwert abgeleitet werden. Der so ermittelte motorindividuelle Korrekturwert kann dann zum Abruf gespeichert werden. Der motorindividuelle Korrekturwert kann so zum Beispiel für jeden Serien-Verbrennungsmotor quasi als letzter Schritt der Produktion, am Ende der Produktionslinie (End of Line) in einem Testlauf des Verbrennungsmotors erfolgen.

Um in Weiterbildung des Verfahrens die Genauigkeit der Ermittlung der Zusammensetzung des verwendeten Kraftstoffs weiter zu steigern, können zusätzliche Betriebsparameter des Verbrennungsmotors bei der Ermittlung der Kraftstoffzusammensetzung herangezogen werden. Dazu kann zumindest einer der weiteren Betriebsparameter
- Temperatur des angesaugten Mediums im Ansaugtrakt,
- Temperatur eines zur Kühlung des Verbrennungsmotors verwendeten Kühlmittels und
- Motordrehzahl des Verbrennungsmotors,
bei der Ermittlung der Kraftstoffzusammensetzung des verwendeten Kraftstoffes herangezogen werden.

Die Temperatur des angesaugten Mediums, also im Wesentlichen der Ansaugluft, beeinflusst direkt die Schallgeschwindigkeit im Medium und somit die Druckausbreitung im Einlasstrakt. Diese Temperatur kann im Ansaugtrakt gemessen werden und ist somit bekannt.

Auch die Temperatur des Kühlmittels kann die Schallgeschwindigkeit im Angesaugten Medium durch Wärmeübertragung im Einlasskanal und im Zylinder beeinflussen. Auch diese Temperatur wird in der Regel überwacht und dazu gemessen, steht also ohnedies bereit und kann bei der Ermittlung der Kraftstoff Zusammensetzung herangezogen werden.

Die Motordrehzahl ist eine der den Betriebspunkt des Verbrennungsmotors charakterisierenden Größen und beeinflusst die verfügbare Zeit für die Druckausbreitung im Einlasskanal. Auch die Motordrehzahl wird ständig überwacht und steht somit bei der Ermittlung der Kraftstoffzusammensetzung zur Verfügung.

Die vorgenannten zusätzlichen Parameter stehen also ohnedies zur Verfügung oder können auf einfache Weise ermittelt werden. Der jeweilige Einfluss der genannten Parameter auf die Phasenlagendifferenz der ausgesuchten Signalfrequenz der Druckschwingungssignale wird dabei als bekannt vorausgesetzt und wurde beispielsweise bei der Vermessung eines Referenz-Verbrennungsmotors ermittelt und in den Referenzwert-Kennfeldern mit abgespeichert. Auch die Einbeziehung mittels entsprechender Korrekturfaktoren oder Korrekturfunktionen bei der Berechnung der Kraftstoffzusammensetzung mittels einer Modell-Funktion stellt eine Möglichkeit dar, diese zusätzlichen, weiteren Betriebsparameter bei der Ermittlung der Kraftstoffzusammensetzung zu berücksichtigen.

In einer vorteilhaft einsetzbaren Ausführung des erfindungsgemäßen Verfahrens erfolgt die Ermittlung der Ist-Phasenlagendifferenzen der ausgesuchten Signalfrequenz sowie die Ermittlung der Zusammensetzung des aktuell verwendeten Kraftstoffes mit Hilfe einer dem Verbrennungsmotor zugeordneten elektronischen Recheneinheit, beispielsweise der zentralen Motor-Steuereinheit (CPU) des Verbrennungsmotors, wobei die Referenzwert-Kennfelder oder die Modell-Funktionen, sowie gegebenenfalls der motorindividuelle Korrekturwert, in zumindest einem Speicherbereich der elektronischen Recheneinheit gespeichert sind. Auf diese Weise lässt sich das erfindungsgemäße Verfahren automatisch, sehr schnell und wiederkehrend im Betrieb des Serien-Verbrennungsmotors durchführen.

In einem Durchführungsbeispiel kann die vorausgehende Ermittlung der Referenz-Phasenlagendifferenzen der ausgesuchten Signalfrequenz durch die Vermessung eines Referenz-Verbrennungsmotors an zumindest einem definierten Betriebspunkt, in einem Messbetrieb unter Verwendung von Referenz-Kraftstoffen unterschiedlicher, bekannter Kraftstoffzusammensetzungen, erfolgen. Dabei werden zur Bestimmung der Referenz-Phasenlagendifferenzen der ausgesuchten Signalfrequenz die einem Zylinder des Referenz-Verbrennungsmotors zuordenbaren dynamischen Druckschwingungen im Einlasstrakt, im Messbetrieb zum Einen bei saugsynchroner Kraftstoffeinspritzung sowie zum Anderen ohne Kraftstoffeinspritzung oder bei direkter Kraftstoffeinspritzung in den geschlossenen Brennraum gemessen und entsprechende Druckschwingungssignale werden erzeugt.

Gleichzeitig zur Messung der dynamischen Druckschwingungen wird ein Kurbelwellen-Phasenwinkelsignal ermittelt.

In der Folge werden aus den Druckschwingungssignalen mit Hilfe Diskreter-Fourier-Transformation eine Referenz-Phasenlage sowie eine Referenz-Vergleichs-Phasenlage einer ausgesuchten Signalfrequenz der gemessenen Druckschwingungen in Bezug auf das Kurbelwellen-Phasenwinkelsignal für den jeweiligen Referenz-Kraftstoff ermittelt.

Weiterhin wird eine jeweilige Referenz-Phasenlagendifferenz zwischen der Referenz-Phasenlage und der Referenz-Vergleichs-Phasenlage ermittelt.

Die ermittelten Referenz-Phasenlagendifferenzen werden dann in Abhängigkeit der zugeordneten Kraftstoffzusammensetzungen in Referenzwert-Kennfeldern gespeichert. Dies ermöglicht die zuverlässige Ermittlung der Abhängigkeit zwischen Kraftstoffzusammensetzung und Phasenlagendifferenz der ausgesuchten Signalfrequenz.

Die vorgenannte Vorgehensweise kann unter Variation bestimmter einflussnehmender Betriebsparameter, zum Beispiel an verschiedenen Betriebspunkten, wiederholt werden, um die Datenbasis zu verbreitern und die Einflüsse der weiteren Parameter mit einzubeziehen. Dies erleichtert die Durchführung des Verfahrens im Betrieb, da man dann bei der Durchführung des Verfahrens ggf. nicht auf die exakte Einhaltung bestimmter Parameter angewiesen ist.

Es hat sich erwiesen als ausgesuchte Signalfrequenzen die Ansaugfrequenz oder eine vielfache der Ansaugfrequenz zu wählen. Bei diesen Signalfrequenzen tritt die Abhängigkeit der Phasenlagendifferenz von der Kraftstoffzusammensetzung besonders deutlich hervor.

Vorteilhaft können zur Durchführung des erfindungsgemäßen Verfahrens die dynamischen Druckschwingungen im Ansaugtrakt mit Hilfe eines serienmäßigen Drucksensors im Saugrohr gemessen werden. Dies hat den Vorteil, dass kein zusätzlicher Drucksensor benötigt wird, was einen Kostenvorteil darstellt.

In einem weiteren Beispiel kann zur Durchführung des erfindungsgemäßen Verfahrens das Kurbelwellenpositions-Feedbacksignal mit einem Zähnerad und einem Hall-Sensor ermittelt werden, wobei es sich hierbei um eine gebräuchliche, ggf. ohnehin im Verbrennungsmotor vorhandene Sensoranordnung zur Erfassung der Kurbelwellenumdrehungen handelt. Das Zähnerad ist dabei beispielsweise am äußeren Umfang einer Schwungscheibe oder des Kurbelwellen-Steueradapters 10 (siehe auch Figur 1) angeordnet. Dies hat den Vorteil, dass keine zusätzliche Sensor-Anordnung benötigt wird, was einen Kostenvorteil darstellt.

Besonders vorteilhaft kann das erfindungsgemäße Verfahren durchgeführt werden, wenn die elektronische Recheneinheit, mit deren Hilfe das Verfahren durchgeführt und auf der die Referenzwert-Kennfelder oder die Modellfunktion gespeichert sind, ein Motor-Steuergerät (CPU) zur Steuerung des Verbrennungsmotors ist und eine Anpassung weiterer Steuergrößen oder Steuerroutinen zur Steuerung des Verbrennungsmotors in Abhängigkeit von der ermittelten Kraftstoffzusammensetzung durch das Motor-Steuergerät vorgenommen wird.

Dies hat zum Einen den Vorteil, dass keine Separate elektronische Recheneinheit erforderlich ist und so auch keine zusätzlichen, ggf. störungsanfälligen Schnittstellen zwischen mehreren Recheneinheiten bestehen. Zum Anderen kann das erfindungsgemäße Verfahren so zum integralen Bestandteil der Steuerungsroutinen des Verbrennungsmotors werden, wodurch eine schnelle Anpassung der Steuergrößen oder Steuerroutinen für den Verbrennungsmotor auf den aktuell verwendeten Kraftstoff erfolgen kann.

## Patentansprüche

1. Verfahren zur Ermittlung der Zusammensetzung des zum Normalbetrieb eines Verbrennungsmotors verwendeten Kraftstoffes,
- wobei einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen werden und daraus ein entsprechendes Druckschwingungssignal erzeugt wird und wobei gleichzeitig ein Kurbelwellen-Phasenwinkelsignal ermittelt wird und
- wobei aus dem Druckschwingungssignal, unter Heranziehung des gleichzeitig erfassten Kurbelwellen-Phasenwinkelsignals, mit Hilfe Diskreter-Fourier-Transformation die Ist-Phasenlage einer ausgesuchten Signalfrequenz der gemessenen Druckschwingungen in Bezug auf den Kurbelwellen-Phasenwinkel ermittelt wird,
- wobei die ausgesuchte Signalfrequenz eine Ansaugfrequenz oder eine vielfache der Ansaugfrequenz des Verbrennungsmotors ist, **dadurch gekennzeichnet, dass**
- zusätzlich zur ermittelten Ist-Phasenlage der ausgesuchten Signalfrequenz bei saugsynchroner Kraftstoffeinspritzung, in gleicher Weise eine weitere Vergleichs-Phasenlage der ausgesuchten Signalfrequenz ohne Kraftstoffeinspritzung oder bei direkter Kraftstoffeinspritzung in den geschlossenen Brennraum, ermittelt wird und dass
- eine Ist-Phasenlagendifferenz zwischen der Ist-Phasenlage und der Vergleichs-Phasenlage ermittelt wird, wobei
- auf Basis der ermittelten Ist-Phasenlagendifferenz, unter Heranziehung von Referenz-Phasenlagendifferenzen der gleichen Signalfrequenz für unterschiedliche Kraftstoffzusammensetzungen, die Kraftstoffzusammensetzung des aktuell verwendeten Kraftstoffes ermittelt wird.

2. Verfahren nach Anspruch 1, **dadurch gekennzeichnet, dass** die Referenz-Phasenlagendifferenzen in Referenzwert-Kennfeldern gespeichert sind oder mittels einer gespeicherten Modell-Funktion ermittelt werden.

3. Verfahren nach einem der Ansprüche 1 oder 2, **dadurch gekennzeichnet, dass** die Referenz-Phasenlagendifferenzen der ausgesuchten Signalfrequenz dem Normalbetrieb vorausgehend an einem Referenz-Verbrennungsmotor in Abhängigkeit von unterschiedlichen Kraftstoffzusammensetzungen ermittelt wurden.

4. Verfahren nach Anspruch 3, **dadurch gekennzeichnet, dass** die Modell-Funktion dem Normalbetrieb vorausgehend aus den Referenz-Phasenlagendifferenzen der ausgesuchten Signalfrequenz und den zugeordneten Kraftstoffzusammensetzungen hergeleitet wurde und den Zusammenhang zwischen den Referenz- Phasenlagendifferenzen der ausgesuchten Signalfrequenz und den Kraftstoffzusammensetzungen abbildet.

5. Verfahren nach einem der Ansprüche 1 bis 4, **dadurch gekennzeichnet, dass** bei der Ermittlung der Kraftstoffzusammensetzung ein zusätzlicher, für den jeweiligen Verbrennungsmotor motorindividueller Korrekturwert berücksichtigt wird.

6. Verfahren nach Anspruch 5, **dadurch gekennzeichnet, dass** der für den Verbrennungsmotor motorindividuelle Korrekturwert am jeweiligen Verbrennungsmotor dem Normalbetrieb vorausgehend durch Ermittlung der Ist-Phasenlagendifferenz unter Verwendung eines Referenz-Kraftstoffes mit bekannter Kraftstoffzusammensetzung durch Vergleich mit der Referenz-Phasenlagendifferenz für die bekannte Kraftstoffzusammensetzung ermittelt und gespeichert wird.

7. Verfahren nach einem der Ansprüche 1 bis 6, **dadurch gekennzeichnet, dass** zusätzlich zumindest einer der weiteren Betriebsparameter
- Temperatur des angesaugten Mediums im Ansaugtrakt,
- Temperatur eines zur Kühlung des Verbrennungsmotors verwendeten Kühlmittels,
- Motordrehzahl des Verbrennungsmotors,
bei der Ermittlung der Kraftstoffzusammensetzung des verwendeten Kraftstoffes herangezogen wird.

8. Verfahren nach einem der Ansprüche 2 bis 7, **dadurch gekennzeichnet, dass**
die Ermittlung der Ist-Phasenlagendifferenz der ausgesuchten Signalfrequenz sowie die Ermittlung der Zusammensetzung des aktuell verwendeten Kraftstoffes mit Hilfe einer dem Verbrennungsmotor zugeordneten elektronischen Recheneinheit erfolgt, wobei die Referenzwert-Kennfelder oder die Modell-Funktion, in zumindest einem Speicherbereich der elektronischen Recheneinheit gespeichert sind

9. Verfahren nach Anspruch 8 und 6, **dadurch gekennzeichnet, dass** auch der individuelle Korrekturwert in zumindest einem Speicherbereich der elektronischen Recheneinheit gespeichert ist.

10. Verfahren nach einem der Ansprüche 3 bis 9, wobei die vorausgehende Ermittlung der Referenz-Phasenlagendifferenzen der ausgesuchten Signalfrequenz **gekennzeichnet ist durch** die Vermessung eines Referenz-Verbrennungsmotors an zumindest einem definierten Betriebspunkt, in einem Messbetrieb unter Verwendung von Referenz-Kraftstoffen unterschiedlicher, bekannter Kraftstoffzusammensetzungen,
wobei zur Bestimmung der Referenz-Phasenlagendifferenzen
- die einem Zylinder des Referenz-Verbrennungsmotors zuordenbaren dynamischen Druckschwingungen im Einlasstrakt, im Messbetrieb,
- bei saugsynchroner Kraftstoffeinspritzung sowie
- ohne Kraftstoffeinspritzung oder bei direkter Kraftstoffeinspritzung in den geschlossenen Brennraum,
gemessen und
entsprechende Druckschwingungssignale erzeugt werden,
- wobei gleichzeitig ein Kurbelwellen-Phasenwinkelsignal ermittelt wird und
- aus den Druckschwingungssignalen mit Hilfe Diskreter-Fourier-Transformation eine Referenz-Phasenlage sowie eine Referenz-Vergleichs-Phasenlage einer ausgesuchten Signalfrequenz der gemessenen Druckschwingungen in Bezug auf das Kurbelwellen-Phasenwinkelsignal für den jeweiligen Referenz-Kraftstoff ermittelt werden und
- eine jeweilige Referenz-Phasenlagendifferenz zwischen der Referenz-Phasenlage und der Referenz-Vergleichs-Phasenlage ermittelt und in Abhängigkeit von den zugeordneten Kraftstoffzusammensetzungen in Referenzwert-Kennfeldern gespeichert werden.

11. Verfahren nach einem der vorangehenden Ansprüche, **dadurch gekennzeichnet, dass** die dynamischen Druckschwingungen mit Hilfe eines serienmäßigen Drucksensors im Saugrohr gemessen werden.

12. Verfahren nach einem der vorausgehenden Ansprüche, **dadurch gekennzeichnet, dass** das Kurbelwellenpositions-Feedbacksignal mit einem Zähnerad und einem Hall-Sensor ermittelt wird.

13. Verfahren nach einem der Ansprüche 8 bis 12, **dadurch gekennzeichnet, dass** die elektronische Recheneinheit ein Motor-Steuergerät zur Steuerung des Verbrennungsmotors ist und eine Anpassung weiterer Steuergrößen oder Steuerroutinen zur Steuerung des Verbrennungsmotors in Abhängigkeit von der ermittelten Kraftstoff Zusammensetzung durch das Motor-Steuergerät vorgenommen wird.

## Claims

1. Method for determining the composition of the fuel used for the normal operation of an internal combustion engine,
- wherein dynamic pressure oscillations, assignable to a cylinder of the internal combustion engine, in the inlet tract of the respective internal combustion engine are measured at a defined operating point during intake-synchronous fuel injection during normal operation, and from these, a corresponding pressure oscillation signal is generated, and wherein, at the same time, a crankshaft phase angle signal is determined, and
- wherein, from the pressure oscillation signal, taking into consideration the crankshaft phase angle signal detected at the same time, the actual phase position of a selected signal frequency of the measured pressure oscillations in relation to the crankshaft phase angle is determined using discrete Fourier transformation,
- wherein the selected signal frequency is an intake frequency or a multiple of the intake frequency of the internal combustion engine, **characterized in that**,
- in addition to the determined actual phase position of the selected signal frequency in the case of intake-synchronous fuel injection, a further comparison phase position is determined in the same way from the selected signal frequency in the absence of fuel injection or in the case of direct fuel injection into the closed combustion chamber, and **in that**
- an actual phase position difference between the actual phase position and the comparison phase position is determined, wherein,
- on the basis of the determined actual phase position difference, taking into consideration reference phase position differences of the same signal frequency for different fuel compositions, the fuel composition of the presently used fuel is determined.

2. Method according to Claim 1, **characterized in that** the reference phase position differences are stored in reference value characteristic maps or are determined by means of a stored model function.

3. Method according to either of Claims 1 and 2, **characterized in that** the reference phase position differences of the selected signal frequency have been determined prior to the normal operation on a reference internal combustion engine as a function of different fuel compositions.

4. Method according to Claim 3, **characterized in that** the model function has been derived prior to the normal operation from the reference phase position differences of the selected signal frequency and the associated fuel compositions, and replicates the relationship between the reference phase position differences of the selected signal frequency and the fuel compositions.

5. Method according to one of Claims 1 to 4, **characterized in that** an additional corrective value, which is specific to the respective internal combustion engine, is taken into consideration in the determination of the fuel composition.

6. Method according to Claim 5, **characterized in that** the corrective value specific to the internal combustion engine is determined and stored on the respective internal combustion engine prior to the normal operation by determination of the actual phase position difference using a reference fuel with known fuel composition by comparison with the reference phase position difference for the known fuel composition.

7. Method according to one of Claims 1 to 6, **characterized in that**, additionally, at least one of the further operating parameters
- temperature of the intake medium in the intake tract,
- temperature of a coolant used for cooling the internal combustion engine,
- engine speed of the internal combustion engine,
is taken into consideration in the determination of the fuel composition of the fuel used.

8. Method according to one of Claims 2 to 7, **characterized in that**
the determination of the actual phase position difference of the selected signal frequency and the determination of the composition of the presently used fuel is performed with the aid of an electronic processing unit assigned to the internal combustion engine, wherein the reference value characteristic maps or the model function are stored in at least one memory area of the electronic processing unit.

9. Method according to Claim 8 and 6, **characterized in that** the individual corrective value is also stored in at least one memory area of the electronic processing unit.

10. Method according to one of Claims 3 to 9, wherein the prior determination of the reference phase position differences of the selected signal frequency is **characterized by** the measurement of a reference internal combustion engine at at least one defined operating point, in a measurement mode using reference fuels of different, known fuel compositions,
wherein, for the determination of the reference phase position differences,
- the dynamic pressure oscillations, assignable to a cylinder of the reference internal combustion engine, in the inlet tract are measured in the measurement mode,
- in the case of intake-synchronous fuel injection and
- in the absence of fuel injection or in the case of direct fuel injection into the closed combustion chamber,
and
corresponding pressure oscillation signals are generated,
- wherein, at the same time, a crankshaft phase angle signal is determined, and,
- from the pressure oscillation signals, a reference phase position and a reference comparison phase position of a selected signal frequency of the measured pressure oscillations in relation to the crankshaft phase angle signal for the respective reference fuel are determined using discrete Fourier transformation, and
- a respective reference phase position difference between the reference phase position and the reference comparison phase position is determined and stored as a function of the associated fuel compositions in reference value characteristic maps.

11. Method according to one of the preceding claims, **characterized in that** the dynamic pressure oscillations are measured by means of a series-production-type pressure sensor in the intake pipe.

12. Method according to one of the preceding claims, **characterized in that** the crankshaft position feedback signal is determined by means of a toothed gear and a Hall sensor.

13. Method according to one of Claims 8 to 12, **characterized in that** the electronic processing unit is an engine control unit for controlling the internal combustion engine, and an adaptation of further control variables or control routines for the control of the internal combustion engine is performed by the engine control unit as a function of the determined fuel composition.

## Revendications

1. Procédé pour déterminer la composition du carburant utilisé pour le fonctionnement normal d'un moteur à combustion interne,
- dans lequel des pulsations de pression dynamiques pouvant être associées à un cylindre du moteur à combustion interne sont mesurées en fonctionnement normal dans le système d'admission du moteur à combustion interne concerné, à un point de fonctionnement défini lors de l'injection de carburant synchrone avec l'admission et à partir de cette mesure un signal de pulsations de pression correspondant est généré, et dans lequel un signal d'angle de phase de vilebrequin est déterminé simultanément et
- dans lequel à partir du signal de pulsations de pression, en utilisant le signal d'angle de phase de vilebrequin acquis simultanément, à l'aide d'une transformée de Fourier discrète, la position de phase réelle d'une fréquence de signal sélectionnée des pulsations de pression mesurées par rapport à l'angle de phase de vilebrequin est déterminée,
- dans lequel la fréquence de signal sélectionnée est une fréquence d'admission ou un multiple de la fréquence d'admission du moteur à combustion interne, **caractérisé en ce que**
- en plus de la position de phase réelle déterminée de la fréquence de signal sélectionnée lors de l'injection de carburant synchrone avec l'admission, de la même manière, une autre position de phase de comparaison de la fréquence de signal sélectionnée sans injection de carburant ou lors d'une injection de carburant directe dans la chambre de combustion fermée est déterminée, et **en ce que**
- une différence de position de phase réelle entre la position de phase réelle et la position de phase de comparaison est déterminée,
- sur la base de la différence de position de phase réelle déterminée, en utilisant des différences de position de phase de référence de la même fréquence de signal pour différentes compositions de carburant, la composition du carburant actuellement utilisé étant déterminée.

2. Procédé selon la revendication 1, **caractérisé en ce que** les différences de position de phase de référence sont mémorisées dans des cartographies de valeurs de référence ou sont déterminées au moyen d'une fonction de modèle mémorisée.

3. Procédé selon l'une des revendications 1 ou 2, **caractérisé en ce que** les différences de position de phase de référence de la fréquence de signal sélectionnée ont été déterminées avant de fonctionnement normal dans un moteur à combustion interne de référence en fonction de différentes compositions de carburant.

4. Procédé selon la revendication 3, **caractérisé en ce que** la fonction de modèle a été déterminée avant le fonctionnement normal à partir des différences de position de phase de référence de la fréquence de signal sélectionnée et des compositions de carburant associées et représente la relation entre les différences de position de phase de référence de la fréquence de signal sélectionnée et les compositions de carburant.

5. Procédé selon l'une des revendications 1 à 4, **caractérisé en ce que** lors de la détermination de la composition de carburant, une valeur de correction supplémentaire spécifique au moteur à combustion interne respectif est prise en compte.

6. Procédé selon la revendication 5, **caractérisé en ce que** la valeur de correction spécifique au moteur à combustion interne est déterminée et mémorisée pour le moteur à combustion interne respectif avant le fonctionnement normal par détermination de la différence de position de phase réelle en utilisant un carburant de référence de composition connue par comparaison avec la différence de position de phase de référence pour la composition de carburant connue.

7. Procédé selon l'une des revendications 1 à 6, **caractérisé en ce qu'**en outre au moins l'un des autres paramètres de fonctionnement que sont
- la température du fluide aspiré dans le système d'admission,
- la température d'un liquide de refroidissement utilisé pour le refroidissement du moteur à combustion interne,
- le régime du moteur à combustion interne,
est utilisé lors de la détermination de la composition du carburant utilisé.

8. Procédé selon l'une des revendications 2 à 7, **caractérisé en ce que**
la détermination de la différence de position de phase réelle de la fréquence de signal sélectionnée ainsi que la détermination de la composition du carburant utilisé actuellement sont effectuées à l'aide d'une unité de calcul électronique associée au moteur à combustion interne, les cartographies de valeurs de référence ou la fonction de modèle étant mémorisées dans au moins une zone de mémoire de l'unité de calcul électronique.

9. Procédé selon les revendications 8 et 6, **caractérisé en ce que** la valeur de correction individuelle est également mémorisée dans au moins une zone de mémoire de l'unité de calcul électronique.

10. Procédé selon l'une des revendications 3 à 9, dans lequel la détermination préalable des différences de position de phase de référence de la fréquence de signal sélectionnée est **caractérisée par** la mesure d'un moteur à combustion interne de référence à au moins un point de fonctionnement défini, dans un fonctionnement de mesure en utilisant des carburants de référence de différentes compositions connues,
dans lequel, pour la détermination des différences de position de phase de référence,
- les pulsations de pression dynamiques pouvant être associées à un cylindre du moteur à combustion interne de référence dans le système d'admission, dans le fonctionnement de mesure,
- lors de l'injection de carburant synchrone avec l'admission ainsi que
- sans injection de carburant ou lors de l'injection de carburant directe dans la chambre de combustion fermée,
sont mesurées et
des signaux de pulsations de pression correspondants sont générés,
- dans lequel simultanément un signal d'angle de phase de vilebrequin est déterminé et
- à partir des signaux de pulsations de pression, à l'aide d'une transformée de Fourier discrète, une position de phase de référence ainsi qu'une position de phase de comparaison de référence d'une fréquence de signal sélectionnée des pulsations de pression mesurées par rapport au signal d'angle de phase de vilebrequin pour le carburant de référence respectif sont déterminées et
- une différence de position de phase de référence respective entre la position de phase de référence et la position de phase de comparaison de référence est déterminée et est mémorisée dans des cartographies de valeurs de référence en fonction des compositions de carburant associées.

11. Procédé selon l'une des revendications précédentes, **caractérisé en ce que** les pulsations de pression dynamiques sont mesurées dans le collecteur d'admission à l'aide d'un capteur de pression de série.

12. Procédé selon l'une des revendications précédentes, **caractérisé en ce que** le signal de rétroaction de position de vilebrequin est déterminé à l'aide d'une roue dentée et d'un capteur de Hall.

13. Procédé selon l'une des revendications 8 à 12, **caractérisé en ce que** l'unité de calcul électronique est un appareil de commande de moteur pour la commande du moteur à combustion interne et une adaptation d'autres grandeurs de commande ou routines de commande pour la commande du moteur à combustion interne est effectuée au moyen de l'appareil de commande de moteur en fonction de la composition de carburant déterminée.
